(19) Europäisches Patentamt
European Patent Office
Office européen des brevets

(11) Veröffentlichungsnummer: **0 047 460 B1**

# (12) EUROPÄISCHE PATENTSCHRIFT

(45) Veröffentlichungstag der Patentschrift: **08.08.84**

(51) Int. Cl.³: **C 07 F 9/42**, C 07 F 9/40, C 07 F 9/38

(21) Anmeldenummer: **81106788.3**

(22) Anmeldetag: **31.08.81**

## (54) Verfahren zur Herstellung von Vinylphosphonsäuredichlorid und 2-Chlorethanphosphonsäuredichlorid.

(30) Priorität: **06.09.80 DE 3033614**

(43) Veröffentlichungstag der Anmeldung: **17.03.82 Patentblatt 82/11**

(45) Bekanntmachung des Hinweises auf die Patenterteilung: **08.08.84 Patentblatt 84/32**

(84) Benannte Vertragsstaaten: **BE CH DE FR GB IT LI NL**

(56) Entgegenhaltungen:
**CH - A - 583 743**
**DE - A - 2 241 993**
**DE - A - 2 357 676**
**DE - B - 2 129 584**
**DE - B - 2 357 678**
**DE - C - 1 158 509**
**US - A - 3 098 865**
**US - A - 3 179 696**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr., Altkönigstrasse 11a, D-6242 Kronberg/Taunus (DE)**
Erfinder: **Dürsch, Walter, Dr., In der Braubach 4, D-6240 Königstein/Taunus (DE)**

EP 0 047 460 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

2-Chlorethylestergruppen enthaltende 2-Chlorethanphosphonsäurederivate, insbesondere 2-Chlorethanphosphonsäure-bis-2-chlorethylester, sind wertvolle Ausgangsstoffe zur Herstellung von 2-Chlorethanphosphonsäuredichlorid, aus dem durch Chlorwasserstoffabspaltung Vinylphosphonsäuredichlorid hergestellt werden kann (DE-B2-2 357 678). Das 2-Chlorethanphosphonsäuredichlorid kann gemäß CH-A5-583 743 erhalten werden durch Reaktion des 2-Chlorethanphosphonsäure-bis-2-chlorethylesters mit Phosgen in Gegenwart von Katalysatoren, wie Pyridin. Bei diesem Verfahren fallen beträchtliche Mengen an 1.2-Dichlorethan an, die die Raum/Zeitausbeute des Verfahrens ungünstig beeinflussen. Weiterhin ist ein weiterer Schritt — der der Chlorwasserstoffabspaltung bei hohen Temperaturen — notwendig, um zu dem in erster Linie erwünschten Endprodukt, dem Vinylphosphonsäuredichlorid, zu gelangen. Gesucht sind daher Verfahren, die zwar 2-Chlorethylestergruppen enthaltende 2-Chlorethanphosphonsäurederivate als Ausgangsstoffe verwenden, aber in einfacherer Weise direkt zu Vinylphosphonsäuredichlorid führen.

Es wurde nun gefunden, daß man auf einfache und wirtschaftliche Weise Vinylphosphonsäuredichlorid und 2-Chlorethanphosphonsäuredichlorid herstellen kann, indem man 2-Chlor-ethylestergruppen enthaltende 2-Chlorethanphosphonsäurederivate oder den 2-Chlorethanphosphonsäuremono-2-chlorethylester auf 150—230° C, vorzugsweise 170—215° C erhitzt, und das verbleibende Reaktionsgemisch bei 90—100° C, vorzugsweise 120—170° C in Gegenwart von basischen Katalysatoren oder Alkalimetallsalzen sowie in Gegenwart von Phosphonsäuredichloriden mit Phosgen umsetzt.

In der ersten Stufe können dem Reaktionsgemisch basische oder saure Katalysatoren zugefügt werden.

Die als Ausgangsprodukt dienenden 2-Chlorethanphosphonsäurederivate, welche 2-Chlorethylestergruppen enthalten, werden hergestellt durch die bekannte Arbusow-Umlagerung von Trischlorethylphosphit. Bei dieser Umlagerung erhält man als wichtigste Verbindung den 2-Chlorethanphosphonsäure-bis-2-chlorethylester. Weiterhin erhält man bei der Arbusow-Umlagerung von Trischlorethylphosphit auch häufig nicht destillierbare sogenannte Polykondensate von im wesentlichen unbekannten Strukturen, darunter auch die Verbindung der Formel

$$\begin{array}{l} \qquad\qquad\quad O \qquad\qquad\quad O \\ \qquad\qquad\quad \| \qquad\qquad\quad\; \| \\ ClCH_2CH_2POCH_2CH_2P(OCH_2CH_2Cl)_2 \\ \qquad\qquad\quad | \\ \qquad\qquad\quad OCH_2CH_2Cl \end{array}$$

Alle diese Produkte können allein oder in Mischung miteinander als Ausgangsprodukt für die Herstellung der Vinylphosphonsäurederivate dienen. Auch der 2-Chlorethanphosphonsäuremono-2-chlorethylester ist verwendbar.

Bevorzugt ist jedoch als Ausgangsprodukt das gesamte Reaktionsgemisch der Arbusow-Umlagerung, wie es bei der Umlagerung anfällt, d. h. im Regelfall der 2-Chlorethanphosphonsäure-bis-2-chlorethylester im Gemisch mit den nicht destillierbaren sogenannten Polykondensaten.

Als saure oder basische Katalysatoren für diese Stufe kommen zahlreiche Verbindungen in Frage. Als saure Katalysatoren lassen sich beispielsweise verwenden:

A. Schwefelsäure, Phosphorsäure, Chlorwasserstoffsäure, Bromwasserstoffsäure;
B. Halogenhaltige Carbonsäuren mit einem $P_{Ka}$-Wert < 2,5 wie Dichloressigsäure, Trichloressigsäure, Trifluoressigsäure;
C. Aromatische Sulfonsäuren mit einem $P_{Ka}$-Wert < 2,5 wie Benzolsulfonsäure, p-Toluolsulfonsäure;
D. Bevorzugt Phosphinsäuren mit 2 bis 18 Kohlenstoffatomen wie Dimethylphosphinsäure, Methylethylphosphinsäure, Dioktylphosphinsäure, Methylphenylphosphinsäure, Diphenylphosphinsäure;
E. Besonders bevorzugt Phosphonsäuren mit 1 bis 18 Kohlenstoffatomen und deren Halbester mit 1 bis 4 Kohlenstoffatomen im Alkoholrest wie Methanphosphonsäure, Propanphosphonsäure, Propanphosphonsäuremonomethylester, Oktadekanphosphonsäure, 2-Chlorethanphosphonsäure, 2-Chlorethanphosphonsäuremono-2-chlorethylester, Vinylphosphonsäure, Vinylphosphonsäuremono-2-chlorethylester, Vinylphosphonsäuremonoethylester, Benzolphosphonsäure.
F. Ebenfalls besonders bevorzugt Pyrophosphonsäuren oder deren Halbester wie 2-Chlorethanpyrophosphonsäure, Benzolpyrophosphonsäure, Vinylpyrophosphonsäure, Vinylpyrophosphonsäuremono-2-chlorethylester.
G. Sehr geeignet sind auch die sauren Reaktionsgemische, die bei dem erfindungsgemäßen Verfahren entstehen.

Geeignet sind auch die Alkalisalze, bevorzugt Natrium- oder Kaliumsalze, der unter A bis F genannten Säuren.

Als basische Katalysatoren lassen sich verwenden:

A. Tertiäre aliphatische und aromatische Amine und Phosphine mit 3 bis 18 Kohlenstoffatomen wie Trimethylamin, Tripropylamin, Tributylamin, Triphenylamin, Trimethylphosphin, Triethylphosphin, Tripropylphosphin, Tributylphosphin, Triphenylphosphin, und Tris-(p-dimethylamino-phenyl)-phosphin und die entsprechenden gemischten Amine, Phosphine, Phospholane und Phospholene wie Dimethylethylamin, Diethylbutylamin, N-Dimethylanilin, 4-Methyl-N-dimethylanilin, N-Diethylanilin, N,N-Tetramethylphenyldiamin oder N-Methylpyrrolidin; Methyldiethylphosphin, Dimethylpropylphosphin, Diethylbenzylphosphin, 1-Methyl-phospholen-3 und 2-Ethyl-3-methyl-phospholen-3.

B. Quartäre Ammoniumsalze bzw. Phosphoniumsalze mit 3 bis 18 Kohlenstoffatomen wie Tetramethylammoniumchlorid oder -bromid, Tetraethylphosphoniumchlorid, Trimethylbenzylammoniumchlorid, Triethylbenzylammoniumchlorid, Triethylbenzylammoniumbromid, Trimethylbenzylphosphoniumchlorid, Triphenyletyhlphosphonium-2,4-diaminobenzosulfonat;

C. Heterocyclische Verbindungen mit aromatischem Charakter wie Pyridin, 4-(Dimethylamino)-pyridin, Chinolin, ihre verschiedenen Alkyl- und Dialkyl-, vorzugsweise Methyl- bzw. Dimethylderivate, Imidazol, N-Vinylimidazol, Benzthiazol, 2-Amino-6-ethoxybenzthiazol, ferner Phosphabenzole;

D. Säureamide wie Dimethylformamid, Diethylformamid, N-Dimethylacetamid, N-Diethylpropionamid, N-Methylbenzamid, N-Methylpyrrolidon, N,N'-Tetramethylterephthalsäurediamid oder Harnstoffe wie Tetramethylharnstoff und Trimethylphenylharnstoff;

E. Sonstige Stickstoff- oder Phosphorverbindungen mit einer höheren Wertigkeit eines N- oder P-Atoms als 3 wie Pyridin-N-oxid, Trimethylphosphinoxid, Tributylphosphinoxid, Trihexylphosphinoxid, Triphenylphosphinoxid, Trihexylphosphinoxid, Trimethylphosphinoxid, Dimethylphenylphosphinoxid, Dimethylphenylphosphinsulfid, Dimethylchlormethylphosphinoxid, Dimethyleikosylphosphinoxid, Dimethyldodecylphosphinoxid, Dimethylphosphinoxid, Dimethylpyrrolidinyl-l-methylphosphinoxid, Triphenylphosphin-dichlorid, Dimethyldodecylphosphinsulfid, Triphenylphosphinimin, Dimethylchlormethylphosphindichlorid, N-2-Dimethylphosphinylethyl-methylacetamid, N-2-Dimethylphosphinyl-ethylmethyl-amin, Phospholenoxid wie 1-Methylphospholen-1-oxid und 1-Ethyl-3-methylphospholen-1-oxid;

F. Amine der phosphinigen und phosphonigen Säure und der Phosphin- und Phosphonsäuren sowie ihrer Thioanaloga, wie Ethanphosphonsäure-bis-diethylamid, Methan-butanphosphinigsäure-dimethylamid, Diethylphosphinigsäureisobutylamid. Ferner Triamide der Phosphor- und der Thiophosphorsäure wie Hexamethylphosphorsäuretrisamid.

G. Alkalicarbonate, bevorzugt Soda und Pottasche, Alkalihydroxyde, bevorzugt Natrium- und Kaliumhydroxyd, Alkalialkoholate, bevorzugt Natriummethylat.

Weiterhin kommen als Katalysatoren in Frage die Salze der hypophosphorigen Säure, z. B. Natriumhypophosphit, Kaliumhypophosphit. Diese Katalysatoren sind besonders bevorzugt auch als Zusatzstoffe, die eine Dunkelverfärbung des Reaktionsgutes weitgehend verhindern.

Die Katalysatoren werden in Mengen von 0,01 bis 10, bevorzugt 0,1 bis 5 Gew.-%, eingesetzt. Bei Verwendung der bereits gewonnenen sauren Reaktionsgemische können auch größere Mengen von 10 bis 50 Gew.-% eingesetzt werden.

Das Verfahren wird im allgemeinen so durchgeführt, daß die Ausgangsprodukte auf die Reaktionstemperatur erhitzt werden. Dann beginnt die Abspaltung des 1,2-Dichlorethans, begleitet durch gleichzeitige Abspaltung geringerer Mengen Chlorwasserstoff. Das sich abspaltende 1,2-Dichlorethan destilliert unter Normaldruck ab, gegebenenfalls unter Zuhilfenahme eines Inertgasstroms. Als Inertgas kommt insbesondere Stickstoff in Frage. Es kann im Einzelfall vorteilhaft sein, vor allem zum Ende der Reaktion, im Vakuum abzudestillieren. Die Abspaltung des 1,2-Dichlorethans ist nach etwa 5 bis etwa 20 Stunden beendet. Bei völliger Abspaltung des 1,2-Dichlorethans ist das Endprodukt dann weitgehend chlorfrei oder chlorarm. Es ist aber zweckmäßig, die Abspaltung des 1,2-Dichlorethans nicht bis zur völligen Chlorfreiheit des Endproduktes zu führen, sondern nur bis zu einem Gehalt von etwa 1 bis etwa 10%, vorzugsweise 5 bis 8%. Dieses Chlor liegt vor in Form von Chloräthylgruppen. Weitgehend chlorfreie Endprodukte sind für die Weiterverarbeitung meistens weniger geeignet, da sie häufig dunkelverfärbt sind und bei den hohen Reaktionstemperaturen bereits zur Zersetzung neigen.

Die Reaktionstemperaturen liegen bei 150—230° C, vorzugsweise 170—215° C. Höhere Temperaturen sind möglich, bringen aber keinen Vorteil. Es besteht die Gefahr der Zersetzung, auch der Polymerisation.

Beim Einsatz der zuvor genannten Katalysatoren kann bei etwas tieferen Temperaturen gearbeitet werden als ohne Katalysatoren. Weiterhin beeinflussen die Katalysatoren häufig die Farbe des Endproduktes günstig.

Das Verfahren kann auch kontinuierlich gestaltet werden. Es kann vorteilhaft sein, Polymerisationsinhibitoren wie z. B. Hydrochinon, Hydrochinonmonomethylether oder Phenothiazin zuzusetzen.

Die Reaktionsprodukte dieser ersten Stufe bestehen aus Gemischen von Vinylphosphonsäurederivaten, wobei die Art und die Menge der einzelnen Bestandteil nicht bekannt ist. Im idealisierten Fall erhält man, ausgehend von 2-Chlorethanphosphonsäure-bis-2-chlorethylester, ein Gemisch der Verbindungen der Formeln

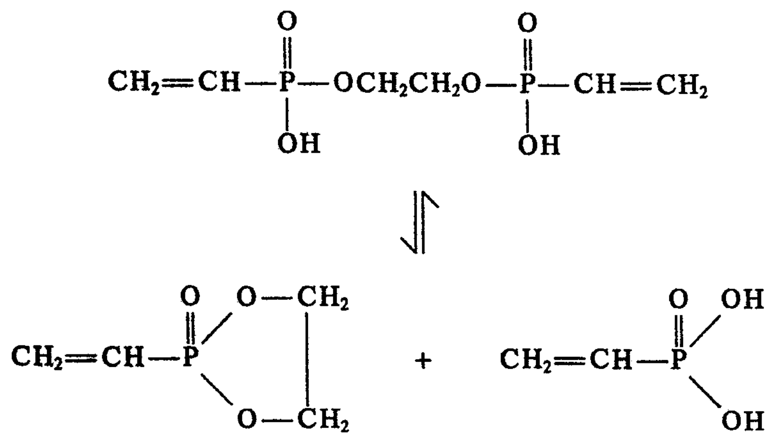

(1)

(2) + (3)

Die beiden Verbindungen (2) und (3) stehen im Gleichgewicht mit der Verbindung (1). Daneben enthält das Reaktionsgemisch auch noch Vinylpyrophosphonsäure bzw. deren Derivate. Unabhängig von der Art der verwendeten Ausgangsverbindungen sind aber alle in dem Reaktionsprodukt vorhandenen Einzelverbindungen dadurch gekennzeichnet, daß sie Vinylphosphonsäure-Gruppen enthalten und, in Abhängigkeit vom Chlorgehalt, eine gewisse Anzahl von Chloräthylgruppen. Die erfindungsgemäßen Vinylphosphonsäurederivate sind wasserlöslich, auch bei dem angegebenen Chlorgehalt von 1 bis 10%.

Die so erhaltenen Gemische von verschiedenen Vinylphosphonsäurederivaten werden anschließend direkt ohne Isolierung einzelner Verbindungen phosgeniert, und zwar bei Temperaturen von 90 bis 200°C, vorzugsweise 120 bis 170°C, in Gegenwart von basischen Katalysatoren oder Alkalimetallsalzen oder oben unter A bis F aufgeführten Säuren bzw. Alkalimetallsalzen der unterphosphorigen Säure als Katalysator sowie in Gegenwart von Phosphonsäuredichloriden. Wurde bereits in der ersten Stufe in Gegenwart dieser Katalysatoren gearbeitet, erübrigt sich in der zweiten Stufe ein weiterer Zusatz an Katalysatoren.

Das Verfahren kann, ebenso wie die erste Reaktionsstufe, kontinuierlich gestaltet werden. Auch kann es vorteilhaft sein, die bereits oben erwähnten Polymerisationsinhibitoren zuzusetzen.

Als Katalysatoren, die in dieser Phosgenierung zwingend anwesend sein müssen, kommen in Frage die basischen Katalysatoren, wie sie oben ausgeführt sind für die erste Stufe, sowie die Alkalimetallsalze der oben unter A bis F genannten Säuren. Weiterhin können auch die Alkalimetallsalze der unterphosphorigen Säure als Katalysator dienen.

Grundsätzlich wird die Phosgenierung so durchgeführt, daß man von Anfang an Phosphonsäuredichloride zugibt. Infrage kommen hierfür $C_1-C_{12}$-Alkanphosponsäuredichloride, z. B. Methan-, Ethan- oder Propanphosphonsäuredichlorid, bevorzugt aber Vinylphosphonsäuredichlorid, besonders bevorzugt 2-Chlorethanphosphonsäuredichlorid oder Gemische dieser Säurechloride. Die Menge dieser Phosphonsäuredichloride insgesamt beträgt, bezogen auf die Vinylphosphonsäurederivate (1. Stufe), ca. 5 bis 200, vorzugsweise 20 bis 100 Gew.-%.

Bei dieser Phosgenierung erhält man ein Gemisch aus Vinylphosphonsäuredichlorid und 2-Chlorethanphosphonsäuredichlorid. Beide Verbindungen stehen im Reaktionsgemisch im Gleichgewicht miteinander. Infolge dieses Gleichgewichts läßt sich die Produktion von Vinylphosphonsäuredichlorid in der Weise optimieren, daß man bei der Phosgenierung bereits von Anfang an eine gewisse Menge an 2-Chlorethanphosphonsäuredichlorid zugibt. In der Praxis hat sich ergeben, daß man die beste Ausbeute an Vinylphosphonsäuredichlorid erhält, wenn man ein Gemisch aus Vinyl- und 2-Chlorethanphosphonsäuredichlorid vorlegt. Durch Vorversuche läßt sich gegebenenfalls leicht die Menge an Phosphonsäuredichlorid ermitteln, die zur Erreichung einer maximalen Ausbeute an Vinylphosponsäuredichlorid oder Chlorethylphosphonsäuredichlorid bei der Chlorierung anwesend sein muß. Man erhält dann am Ende der Phosgenierung die gleiche Menge an Chlorethanphosphonsäuredichlorid, die man am Anfang der Reaktion zugesetzt hat, während dagegen bedeutend mehr Vinylphosphonsäuredichlorid entsteht als anfänglich zugegeben. Selbstverständlich ist es ebenso möglich, die Reaktion durch Vorlage geeigneter Mengen an Vinylphosphonsäuredichlorid so zu lenken, daß im wesentlichen oder ausschließlich 2-Chlorethanphosphonsäuredichlorid anfällt. Art und Menge des zur Erzielung eines bestimmten Ergebnisses notwendigen Phosphonsäuredichlorids hängt im einzelnen ab von den Reaktionsbedingungen wie Zeit, Temperatur und Art des Katalysators.

Nach beendeter Chlorierung erhält man ein Gemisch aus Vinyl- und Chlorethylphosphonsäuredichlorid, das sich leicht destillativ trennen läßt. Beide Verbindungen sind wichtige phosphororganische Zwischenprodukte für die Herstellung von Verbindungen zur flammhemmenden Ausrüstung bzw. für die Herstellung von Chlorethanphosphonsäure, das als Wachstumsregulator im Pflanzenbau eingesetzt wird.

## Beispiel 1

800 g Arbusow-Umlagerungsgemisch von Tris-chlorethylphosphit, das 50% 2-Chlorethanphosphonsäure-bis-2-chlorethylester und 16% 2-Chlorethanphosphonsäure-2-chlorethylester-2-(bis-(2-chlorethoxy)-phosphono)-ethylester enthält, werden mit 2,4 g Natriumhypophoshit-1-hydrat versetzt und unter Stickstoffspülung auf 160° C unter Rühren erhitzt. Es beginnt die Abspaltung von 1.2-Dichlorethan. Nun wird die Temperatur allmählich auf 180° C gesteigert und 1100 g desselben Arbusow-Gemisches, vermischt mit 3,3 g Natriumhypophosphit-1-hydrat, gleichmäßig zugetropft, während 1.2-Dichlorethan abdestilliert. Nach 7,5 Stunden wird die Temperatur auf 200° C gesteigert. Nach 12 Stunden wird unter Stickstoffspülung abgekühlt. Man erhält 821 g Dichlorethan mit einem Gehalt von 0,3% Chlorwasserstoff in der Vorlage. In einer der Vorlage nachgeschalteten Kühlfalle sind weitere 25 g 1.2-Dichlorethan gesammelt. Es verbleiben 1035 g Vinylphosphonsäurederivate.

292 g dieses Reaktionsgemisches werden in ein Gemisch von 250 g 2-Chlorethanphosphonsäuredichlorid, 50 g Vinylphosphonsäuredichlorid und 1 g Triphenylphosphin während 5 Stunden eindosiert, das bei 140° C gerührt wird unter gleichzeitiger ständiger Zufuhr von Phosgen. Dann wird 7 Stunden bei dieser Temperatur weiter Phosgen eingeleitet. Während der Phosgenierung destilliert gebildetes 1.2-Dichlorethan ab. Nach Beendigung der Phosgenierung wird bei Raumtemperatur im Wasserstrahlvakuum das überschüssige Phosgen abgezogen. Dann wird bei 2,66 mbar mit Hilfe einer Kolonne destilliert. Man erhält 280 g Vinylphosphonsäuredichlorid und 250 g 2-Chlorethanphosphonsäuredichlorid. Der Destillationsrückstand beträgt 50 g. Damit wurden aus 292 g Vinylphosphonsäurederivate 230 g Vinylphosphonsäuredichlorid hergestellt. 50 g Vinylphosphonsäuredichlorid und 250 g 2-Chlorethanphosphonsäuredichlorid werden bei einem zweiten Ansatz erneut als Reaktionsmedium eingesetzt.

## Beispiel 2

297 g der in Beispiel 1 hergestellten Vinylphosphonsäurederivate werden in ein Gemisch von 250 g 2-Chlorethanphosphonsäuredichlorid und 50 g Vinylphosphonsäuredichlorid während 3,5 Stunden eindosiert, das bei 145° C gerührt wird unter gleichzeitiger ständiger Zufuhr von Phosgen. Dann wird 12 Stunden bei dieser Temperatur weiter Phosgen eingeleitet. Während der Phosgenierung destilliert gebildetes 1.2-Dichlorethan ab. Nach Beendigung der Phosgenierung wird bei Raumtemperatur im Wasserstrahlvakuum das überschüssige Phosgen abgezogen.

Dann wird bei 2,66 mbar mit Hilfe einer Kolonne destilliert. Man erhält 307,5 g Vinylphosphonsäuredichlorid und 250 g 2-Chlorethanphosphonsäuredichlorid. Der Destillationsrückstand beträgt 62 g. Damit wurden aus 297 g Vinylphosphonsäurederivate 257,5 g Vinylphosphonsäuredichlorid hergestellt. 50 g Vinylphosphonsäuredichlorid und 250 g 2-Chlorethanphosphonsäuredichlorid werden bei einem weiteren Ansatz erneut als Reaktionsmedium eingesetzt.

## Beispiel 3

1000 g Arbusow-Umlagerungsgemisch, wie es in Beispiel 1 eingesetzt wurde, werden auf 214° C unter Stickstoffatmosphäre und unter Rühren erhitzt. 1.2-Dichlorethan beginnt abzudestillieren. Nach 3 Stunden wird die Temperatur auf 208° C gesenkt. Dann werden bei dieser Temperatur weitere 900 g Arbusow-Umlagerungsgemisch während 2,5 Stunden eingetropft, während 1.2-Dichlorethan abdestilliert. Nach 6 Stunden sind 830 g 1.2-Dichlorethan abdestilliert. Der verbleibende Rückstand von 1035 g Vinylphosphonsäurederivate wird abgekühlt, bei 95° C werden 5,7 g Kaliumhypophosphit unter Rühren zugesetzt. Das Reaktionsgut kühlt dann auf Raumtemperatur langsam ab.

298 g der so hergestellten Vinylphosphonsäurederivate werden in 300 g Vinylphosphonsäuredichlorid unter Rühren bei 145° C während 4 Stunden eindosiert, während in das Reaktionsgemisch ständig Phosgen eingegast wird. Dann wird 10 Stunden bei dieser Temperatur weiter phosgeniert. Während der Phosgenierung destilliert gebildetes 1.2-Dichlorethan ab. Nach Beendigung der Phosgenierung wird bei Raumtemperatur im Wasserstrahlvakuum das überschüssige Phosgen abgezogen. Dann wird bei 2,66 mbar mit Hilfe einer Kolonne destilliert. Man erhält 430 g Vinylphosphonsäuredichlorid und 140 g 2-Chlorethanphosphonsäuredichlorid. Der Destillationsrückstand beträgt 39 g. Damit wurden aus 298 g Vinylphosphonsäurederivate 130 g Vinylphosphonsäuredichlorid und 140 g 2-Chlorethanphosphonsäuredichlorid hergestellt. Das 2-Chlorethanphosphonsäuredichlorid kann in einem zweiten Ansatz an Stelle des Vinylphosphonsäuredichlorids als Reaktionsmedium erneut eingesetzt werden.

## Beispiel 4

In 950 g Arbusow-Gemisch, wie es in Beispiel 1 eingesetzt wurde, werden 2 g Soda suspendiert. 500 g eines derartigen Gemenges werden unter Stickstoffatmosphäre auf 192° C erhitzt unter Rühren.

Es beginnt die Abdestillation von 1.2-Dichlorethan. Nun werden die restlichen 450 g des Gemenges bei dieser Temperatur eingetropft, während 1. 2-Dichlorethan abdestilliert. Zum Schluß der Reaktion wird auf 202°C geheizt. Nach 4.5 Stunden sind 400 g 1.2-Dichlorethan abdestilliert. Es verbleiben 549 g Vinylphosphonsäurederivate.

300 g der so hergestellten Vinylphosphonsäurederivate werden in 300 g Vinylphosphonsäuredichlorid unter Rühren bei 145°C während 4 Stunden eindosiert, während in das Reaktionsgemisch ständig Phosgen eingegast wird. Dann wird 11 Stunden bei dieser Temperatur weiter phosgeniert. Während der Phosgenierung destilliert gebildetes 1.2-Chlorethan ab. Nach Beendigung der Phosgenierung wird bei Raumtemperatur im Wasserstrahlvakuum das überschüssige Phosgen abgezogen. Dann wird bei 2,66 mbar mit Hilfe einer Kolonne destilliert. Man erhält 410 g Vinylphosphonsäuredichlorid und 155 g 2-Chlorethanphosphonsäuredichlorid.

Der Destillationsrückstand beträgt 46,5 g. Damit wurden aus 300 g Vinylphosphonsäurederivate 110 g Vinylphosphonsäuredichlorid und 155 g 2-Chlorethanphosphonsäuredichlorid hergestellt. Das 2-Chlorethanphosphonsäuredichlorid kann in einem zweiten Ansatz an Stelle von Vinylphosphonsäuredichlorid als Reaktionsmedium erneut eingesetzt werden.

## Beispiel 5

120 g 2-Chlorethanphosphonsäure-bis-2-chlorethylester werden auf 208—215°C unter Rühren erhitzt. Im Verlauf von 5 Stunden destillieren 59 g 1.2-Dichlorethan ab. Es verbleiben 59 g Vinylphosphonsäurederivate (Säurezahl: 371, Jodzahl: 144, 22,7% Phosphor, 7,4% Chlor). Diese werden wie in Beispiel 1 mit Phosgen umgesetzt. Man erhält 57 g Vinylphosphonsäuredichlorid.

## Beispiel 6

120 g nicht destillierbare Polykondensate, wie sie bei der Arbusow-Umlagerung von Tris-chlorethylphosphit anfallen, mit einem Anteil von 32% an 2-Chlorethanphosphonsäure-2-chlorethylester-2-(bis-(2-chlorethoxy)-phosphono)-ethylester werden auf 200°C unter Rühren erhitzt. Im Verlauf von 6 Stunden spalten sich 41 g 1.2-Dichlorethan mit einem Gehalt von 0,8% Chlorwasserstoff ab. Man erhält 76 g Vinylphosphonsäurederivate (Säurezahl: 338, Jodzahl: 148). Diese werden wie in Beispiel 1 mit Phosgen umgesetzt. Man erhält 65 g Vinylphosphonsäuredichlorid.

## Beispiel 7

135 g 2-Chlorethanphosphonsäure-bis-2-chlorethylester und 4 g Phosphorsäuretrisdimethylamid werden unter Rühren 5 Stunden auf 185—190°C erhitzt. Dabei destillieren 66 g 1.2-Dichlorethan ab. Anschließend wird 6 Stunden ein Vakuum von 46,65 mbar angelegt. In einer der Apparatur nachgeschalteten Kühlfalle kondensieren noch 6 g 1.2-Dichlorethan. Es verbleiben 65,5 g Vinylphosphonsäurederivate (Säurezahl: 374, Jodzahl: 121, 24,1% Phosphor, 1,5% Chlor). Diese werden wie in Beispiel 1 mit Phosgen umgesetzt. Man erhält 63 g Vinylphosphonsäurechlorid.

## Beispiel 8

85,3 g nicht destillierbare Polykondensate, wie sie in Beispiel 6 verwendet wurden, und 1,7 g 1. 4-Di-aza-bicyclo-[2,2,2]-octan (Dabco®) werden 5 Stunden auf 185 bis 190°C unter Rühren erhitzt. Innerhalb von 5 Stunden destillieren 32 g 1.2-Dichlorethan ab. Man erhält 54 g Vinylphosphonsäurederivate (Säurezahl: 368, Jodzahl: 124, 23,1% Phosphor, 5,1% Chlor). Diese werden wie in Beispiel 1 mit Phosgen umgesetzt. Man erhält 49 g Vinylphosphonsäuredichlorid.

## Beispiel 9

85,3 g nicht destillierbare Polykondensate, wie sie in Beispiel 6 verwendet wurden, und 2 g 1-Methyl-1-oxo-$\Delta^3$-phospholen werden 13 Stunden auf 180—190°C unter Rühren erhitzt. Es destillieren 29,5 g 1.2-Dichlorethan ab. Es verbleiben 53 g Vinylphosphonsäurederivate (Säurezahl: 383, Jodzahl: 133, 24,5% Phosphor, 4,7% Chlor). Diese werden wie in Beispiel 1 mit Phosgen umgesetzt. Man erhält 49 g Vinylphosphonsäuredichlorid.

**Patentansprüche**

1. Verfahren zur Herstellung von Vinylphosphonsäuredichlorid und 2-Chlorethanphosphonsäuredichlorid oder deren Gemischen, dadurch gekennzeichnet, daß man in einer 1. Stufe 2-Chlorethylestergruppen enthaltende 2-Chlorethanphosphonsäurederivate oder den 2-Chlorethanphosphonsäuremono-2-chlorethylester auf 150—230°C erhitzt und das verbleibende Reaktionsgemisch in einer 2. Stufe bei 90—200°C in Gegenwart von basischen Katalysatoren oder Alkalimetallsalzen als Katalysatoren sowie in Gegenwart von Phosphonsäuredichloriden mit Phosgen umsetzt.

2. Verfahren nach Anspruch 1, dadurch gekennzeichnet, daß man dem Reaktionsgemisch der 1. Stufe basische oder saure Katalysatoren zufügt.

3. Verfahren nach Anspruch 1, dadurch gekennzeichnet, daß man die Reaktion in der 1. Stufe bei 170 bis 215°C und in der 2. Stufe bei 120 bis 170°C durchführt.

4. Verfahren nach Anspruch 1, dadurch gekennzeichnet, daß man die Reaktion in der 2. Stufe in Gegenwart eines Gemisches aus Vinylphosphonsäuredichlorid und 2-Chlorethanphosphonsäuredichlorid durchführt.

**Claims**

1. A process for the preparation of vinylphosphonic acid dichloride and 2-chloroethanephosphonic acid dichloride or mixtures thereof which is characterized by heating 2-chloroethanephosphonic acid derivatives containing 2-chloroethyl ester groups to 150—230°C in a 1st stage, and, in a 2nd stage, reacting the residual reaction mixture with phosgene at 90—200°C, in the presence of basic catalysts, or of alkali metal salts as catalysts, and in the presence of phosphonic acid dichlorides.

2. A process as claimed in claim 1, wherein acid or basic catalysts are added to the reaction mixture in the 1st stage.

3. A process as claimed in claim 1, wherein the reaction is carried out in the 1st stage at 170 to 215°C and in the 2nd stage at 120 to 170°C.

4. A process as claimed in claim 1, wherein the reaction is carried out in the 2nd stage in the presence of a mixture of vinylphosphonic acid dichloride and 2-chloro-ethanephosphonic acid dichloride.

**Revendications**

1. Procédé pour préparer le dichlorure de l'acide vinyl-phosphonique et le dichlorure de l'acide chloro-2 éthane-phosphonique ou des mélanges de ces composés, procédé caractérisé en ce que, dans une première étape, on chauffe à une température de 150 à 230°C des dérivés de l'acide chloro-2 étahne-phosphonique renfermant des radicaux d'esters chloro-2 éthyliques, ou le chloro-2 éthane-phosphonate de mono-(chloro-2 éthyle), et, dans une seconde étape, on fait réagir le mélange réactionnel restant avec le phosgène à une température de 90 à 200°C, en présence de catalyseurs basiques ou de sels de métaux alcalins agissant comme catalyseurs, ainsi qu'en présence de dichlorures d'acides phosphoniques.

2. Procédé selon la revendication 1, caractérisé en ce qu'on ajoute des catalyseurs basiques ou acides au mélange réactionnel de la première étape.

3. Procédé selon la revendication 1, caractérisé en ce qu'on effectue la réaction, dans la première étape, à une température de 170 à 215°C et, dans la seconde étape, à une température de 120 à 170°C.

4. Procédé selon la revendication 1, caractérisé en ce qu'on effectue la réaction, dans la seconde étape, en présence d'un mélange de dichlorure d'acide vinyl-phosphonique et de dichlorure d'acide chloro-2 éthane-phosphonique.